# EUROPÄISCHE PATENTSCHRIFT

(11) **EP 4 635 135 B1**
(45) Veröffentlichungstag und Bekanntmachung des Hinweises auf die Patenterteilung: **26.08.2026**
(21) Anmeldenummer: 24710658.6
(22) Anmeldetag: 28.02.2024
(51) Int. Cl.: H04L 9/40

(54) **IDENTITÄTS- UND ZUGRIFFSVERWALTUNGSSYSTEM MIT EINER OEM DOMÀNE UND EINER ENDKUNDEN DOMÀNE**
IDENTITY AND ACCESS MANAGEMENT SYSTEM WITH AN OEM DOMAIN AND A ENDUSER DOMAIN
SYSTÈME DE GESTION D'IDENTITÉ ET D'ACCÈS AVEC UN DOMAINE OEM ET UN DOMAINE CLIENTÈLE

(30) Priorität: 09.03.2023 EP 23160996
(43) Veröffentlichungstag der Anmeldung: 22.10.2025
(73) Patentinhaber: Siemens Aktiengesellschaft, 80333 München (DE)
(72) Erfinder: ADAM, Alexander, 92637 Weiden (DE); FRIEDRICH, Sebastian, 76135 Karlsruhe (DE); HERBERTH, Harald, 90522 Oberasbach (DE)
(74) Vertreter: Siemens Patent Attorneys
(86) Internationale Anmeldenummer: PCT/EP2024/055080
(87) Internationale Veröffentlichungsnummer: WO 2024/184150

(56) Entgegenhaltungen:
- WO-A1-2015/021547
- WO-A1-2015/074150
- WO-A2-2011/047276
- US-A1- 2021 390 170

## Beschreibung

### GEBIET DER ERFINDUNG

Die vorliegende Offenbarung bezieht sich auf ein computerimplementiertes Identitäts- und Zugriffsverwaltungssystem. Die vorliegende Offenbarung bezieht sich ferner auf ein computerimplementiertes Verfahren zum Erstellen eines Identitäts- und Zugriffsverwaltungssystems, ein Computerprogramm sowie auf ein computerlesbares Aufzeichnungsmedium.

Insbesondere befindet sich die Erfindung im Umfeld der Identitäts- und Zugriffsverwaltungssysteme (IAM) und die Erfindung betrifft insbesondere ein Multidomänen-Erweiterungssystem für die Identitäts- und Zugriffsverwaltung, das es Erstausrüstern (Original Equipment Manufacturer, OEM) ermöglicht, die Kontrolle über bestimmte Aspekte der Maschinen oder Systeme nach deren Auslieferung zu behalten, während es ihren Endkunden ermöglicht, den Zugriff auf ihre Maschinen oder Systeme in einer Weise zu verwalten, die für deren Betrieb innerhalb ihrer Organisation erforderlich ist.

### TECHNISCHER HINTERGRUND

Ein OEM entwirft und produziert Maschinen oder Systeme mit dem Ziel, sie an seine Endkunden oder Endbenutzer zu liefern. Die Endkunden oder Endbenutzer betreiben diese wiederum, um ihre industriellen Prozesse zu steuern.

Bei der Vorbereitung dieser Maschinen und Systeme wird der OEM sie programmieren und mit Funktionen und Daten ausstatten. Beispielsweise kann eine CNC-Bohrmaschine eine Funktion für die sichere maximale Drehzahl haben, die durch Daten definiert wird, die die maximale Drehgeschwindigkeit der Bohrfutterwelle darstellen. Nach Abschluss der Lieferung muss der OEM weiterhin Zugang zu den Maschinen/Systemen haben, die nicht mehr in seinem Besitz sind, zumindest für Wartungs- und/oder Servicezwecke. In dieser Situation wird der Zugriff auf die Maschine oder das System in der Regel durch die Zuweisung von Rollen oder spezifischen Rechten an Identitäten (z. B. Personen, Mitarbeiter, Benutzer) geregelt. Dieser Schritt der Vorbereitung des Zugriffs auf die Maschine oder das System wird vorzugsweise vor der Auslieferung der Maschine und des Systems an den Endkunden durchgeführt.

Durch den Einsatz von IAM-Systemen wird der Benutzer bei dieser Aufgabe der Zugriffsverwaltung unterstützt und es wird somit sichergestellt, dass nur konfigurierte Zugriffe erlaubt und durchgeführt werden.

Während der OEM bestimmte Parameter, Daten und/oder Funktionen unter seiner Kontrolle behält (d. h. dem Endkunden oder Nutzer den Zugriff darauf verweigern) und jederzeit darauf zugreifen möchte, möchte der Endkunde bzw. Nutzer den Zugriff auf seine Maschinen und Systeme selbst verwalten können, wie es für seinen Betrieb und das Funktionieren seiner Organisation erforderlich ist. Darüber hinaus hat der Endkunde bzw. Nutzer häufig auch seine eigene Identitäts- und Zugriffsmanagementlösung, die er auf den von ihm übernommenen Maschinen und Systemen einsetzen möchte, was mit der Lösung des OEMs kollidiert.

Dieses Problem wird noch dadurch verschärft, dass viele Endkunden Lösungen zur Verwaltung des Zugriffs auf ihre verschiedenen Maschinen und Systeme einführen oder eingeführt haben, die es ermöglichen sollen, den Zugriff weiterhin maschinenspezifisch zu konfigurieren: So kann beispielsweise Mitarbeiter A des Endkunden Zugriff auf Maschine 1 haben, während Mitarbeiter B des Endkunden - der die gleichen Rollen und Rechte wie Mitarbeiter A hat - lediglich Zugriff auf Maschine 2, nicht aber auf Maschine 1 hat. Es besteht also ein Bedarf für den Endkunden, die Möglichkeit zu haben, die Zugriffskonfiguration für diese spezifischen Funktionen auf einer anderen Granularitätsebene zu verwalten.

In modernen Industriesystemen ist es auch immer häufiger üblich, den Zugriffsschutz in die zentralen Systeme der Unternehmen zu integrieren. In diesem Zusammenhang haben Endkunden und OEMs jedoch unterschiedliche Bedürfnisse. So möchten Endkunden in der Lage sein, die Nutzung von Maschinen und Systemen des Unternehmens detailliert zu identifizieren, zu kontrollieren und zu authentifizieren (d. h. bis zu einer Granularität von Maschine zu Maschine) und diese Zugriffe mit ihren eigenen und vorhandenen Mitteln zu verwalten. Andererseits hat der OEM andere Bedürfnisse, da es für den OEM nicht wünschenswert ist, sich um die in jeder Maschine gespeicherten Passwörter oder eine Segregation des Zugriffs von Maschine zu Maschine zu kümmern, sondern vielmehr, dass seine Mitarbeiter für die begrenzten Bedürfnisse der Wartung und des Kundendienstes auf die gelieferten Maschinen und Systeme zugreifen können, z. B. mithilfe von Personalausweisen.

Dabei ist zu beachten, dass die Beziehung zwischen dem Endkunden und dem OEM noch komplexer sein kann, da der OEM, der z.B. die Maschine oder das System geliefert hat, möglicherweise Unterbaugruppen oder Teile verwendet hat, die von anderen OEMs geliefert wurden, wobei diese OEMs ebenfalls den Zugang zu ihren Teilen oder Unterbaugruppen auf die gleiche Weise wie der erste OEM sicherstellen wollen.

Schließlich möchte der Endkunden bei einigen Anwendungen kontrollieren können, wann er dem OEM den Zugang zu den von ihm genutzten Maschinen bzw. Systemen gestattet, z. B. nur für Servicezwecke vor Ort oder über den Teleservice zu einem vereinbarten Zeitpunkt, der für den Betrieb geeignet ist, d. h. zum Beispiel in einer Weise, die den Betriebsplan des Endkunden nicht beeinträchtigt.

Bekannte Lösung sehen das Einrichten von zwei getrennten Zugriffssystemen vor, eines für den OEM und eines für den Endkunden (das optional sein kann). Bei diesem bekannten Ansatz ist die Granularität des Rollen- und Rechtesystems auf der Seite des OEMs weniger ausgeprägt als auf der Seite des Endkunden. Es handelt sich eher darum, ob die Funktionen des O-EMs aktiviert werden, wenn der Zugriff erlaubt ist, oder nicht. So kann der OEM seine eigene Sicherheitslösung wählen, z. B. durch die Verwendung eines Passworts, einer Zugangskarte, eines Spezialschlüssels oder dergleichen. Dies ermöglicht es den Mitarbeitern des OEMs, die Maschinen mit ihrem jeweiligen Passwort, ihrer Zugangskarte oder ihrem Spezialschlüssel zu entsperren und so Zugang zu den jeweiligen Maschinen zu erhalten.

Auf der Seite des Endkunden kann die Maschine frei genutzt werden oder der Endkunde kann einen sicheren Zugang einrichten, z. B. mit einem oder mehreren Passwörtern. Alternativ kann der OEM auch die Integration in die Identitätsmanagementlösung des Endkunden ermöglichen, z. B. durch Microsoft Active Directory, LDAP, OpenID Connect (OIDC), usw. Auf diese Weise kann ein maschinenspezifischer Zugriff eingerichtet werden, indem sichergestellt wird, dass die Mitarbeiter des Endkunden die für eine entsprechende Maschine erforderlichen Passwörter kennen, oder indem im Falle eines zentralen Identitätsmanagementsystems auf der Maschine nur registriert wird, welche Mitarbeiter Zugriff auf die Maschine haben können.

Die Druckschrift US 2021/0390170 A1 - Olden et al. "SYSTEMS, METHODS, AND STORAGE MEDIA FOR MIGRATING IDENTITY INFORMATION ACROSS IDENTITY DOMAINS IN AN IDENTITY INFRASTRUCTURE" sieht vor, dass in einer Systemumgebung mit mehreren Domänen ein Benutzer samt seiner benutzerbezogenen Rechte von einer ersten Domäne zu einer zweiten Domäne migriert wird und dieser dann in der zweiten Domäne dieselben Rechte ausüben darf, wie in der ersten Domäne.

### ZUSAMMENFASSUNG DER ERFINDUNG

Die Aufgabe der vorliegenden Erfindung besteht nun darin, eine verbesserte Multi-Domain Zugangs- und Identitätsverwaltung bereitzustellen, die es insbesondere OEMs ermöglichen, die Kontrolle über bestimmte Aspekte ihrer Maschine oder ihres Systems zu behalten, während Endkunden den Zugriff auf die Maschine verwalten können, der für den Betrieb innerhalb ihrer Organisationen erforderlich ist.

Erfindungsgemäß wird diese Aufgabe durch ein computerimplementiertes Identitäts- und Zugriffsverwaltungssystem, ein Verfahren zur Erstellung und Verwendung eines solchen Systems, ein Computerprogramm und ein Aufzeichnungsmedium mit Computeranweisungen mit den in den unabhängigen Patentansprüchen angegebenen Merkmale gelöst.

Die Erfindung beruht auf einem Identitätsmanagementsystem, das aus mindestens zwei Identitätsmanagement-Subsystemen (oder "Domänen") besteht: Ein Untersystem oder eine Domäne für den OEM und eines für den Endkunden. Jede Domäne wird vom Administrator der entsprechenden Organisation erstellt und verwaltet. Dennoch erstellt in einer zeitlichen Abfolge zunächst der OEM seine Domäne, initialisiert sie und liefert sie als Teil der Maschine oder des Systems an den Endkunden. Der Endkunde seinerseits erstellt dann seine Domäne und verknüpft sie mit der Domäne des OEMs. Mit anderen Worten: Das Teilsystem/die Domäne des Endkunden ist eine Erweiterung des ursprünglichen Systems, das zunächst nur aus dem Teilsystem/der Domäne des OEMs besteht.

Der Endkunde kann also den spezifischen Zugriff auf seine Maschinen/Systeme konfigurieren, z. B. hat sein Mitarbeiter A Zugriff auf Maschine 1, während Mitarbeiter B mit denselben Rollen/Rechten dennoch Zugriff auf Maschine 2 hat. Diese Konfiguration fällt in die Verantwortung des Endkunden und erfordert keine zusätzliche Arbeit seitens des OEMs.

Tatsächlich ermöglicht die Erfindung einen spezifischen Zugriff auf die Maschine entsprechend den Bedürfnissen der Endkunden, während sie dem OEM den Zugriff über die Personalausweise seiner Angestellten ermöglicht, also mit einer anderen Granularitätsebene.

Zusammenfassend sieht die Erfindung ein erweiterbares System vor, in dem zusätzliche OEMs oder Endkunden dem System hinzugefügt werden können. Darüber hinaus sieht die Erfindung ein System feinkörniger Rollen/Rechte für die OEM- und Endkundenbereiche vor, das eine flexible Konfiguration des Zugriffs ermöglicht.

Vorteilhafte Ausgestaltungen und Weiterbildungen ergeben sich aus den weiteren Unteransprüchen sowie aus der Beschreibung unter Bezugnahme auf die Figuren der Zeichnung.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine abstrakte Darstellung des Multi-Domain IAM-Erweiterungssystems zur Verwaltung von Zugängen und Identitäten ist; und
- Fig. 2: eine Darstellung der Schritte einer computerimplementierten Methode ist, die die Erstellung und Nutzung des Multi-Domain IAM-Erweiterungssystems für die Zugangs- und Identitätsverwaltung ermöglicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG DER IMPLEMENTIERUNGEN

Im Folgenden werden die Ausführungsformen nun unter Bezugnahme auf die beigefügten Zeichnungen ausführlich beschrieben. Die Offenbarung kann jedoch nicht auf die Umsetzung beschränkt werden, in der die Idee der Offenbarung präsentiert wird. Eine andere Umsetzung, die im Bereich der Idee einer anderen früheren Offenbarung enthalten ist, oder die frühere Offenbarung können leicht durch Hinzufügen, Ändern, Entfernen und dergleichen eines anderen Elements vorgeschlagen werden.

Die in dieser Spezifikation verwendeten Begriffe wurden so gewählt, dass sie gängige und weit verbreitete allgemeine Begriffe umfassen. In einigen Fällen kann ein Begriff ein Begriff sein, der vom Antragsteller willkürlich festgelegt wurde. In solchen Fällen wird die Bedeutung des Begriffs in dem entsprechenden Teil der detaillierten Beschreibung definiert. So sollten die in der Spezifikation verwendeten Begriffe nicht einfach durch den Namen der Begriffe definiert werden, sondern auf der Grundlage der Bedeutung der Begriffe sowie der allgemeinen Beschreibung dieser Offenbarung.

Die vorliegende Erfindung betrifft ein Multi-Domain IAM-Erweiterungssystem zur Verwaltung von Zugängen und Identitäten für industrielle Maschinen und Systeme, das es den O-EMs/OEMs, die diese Maschinen und Systeme hergestellt haben, ermöglicht, weiterhin die alleinige Kontrolle über einige ihrer Funktionen und Daten zu behalten, während Endbenutzer Zugänge verwalten können, die für den Betrieb innerhalb ihrer Organisation erforderlich sind.

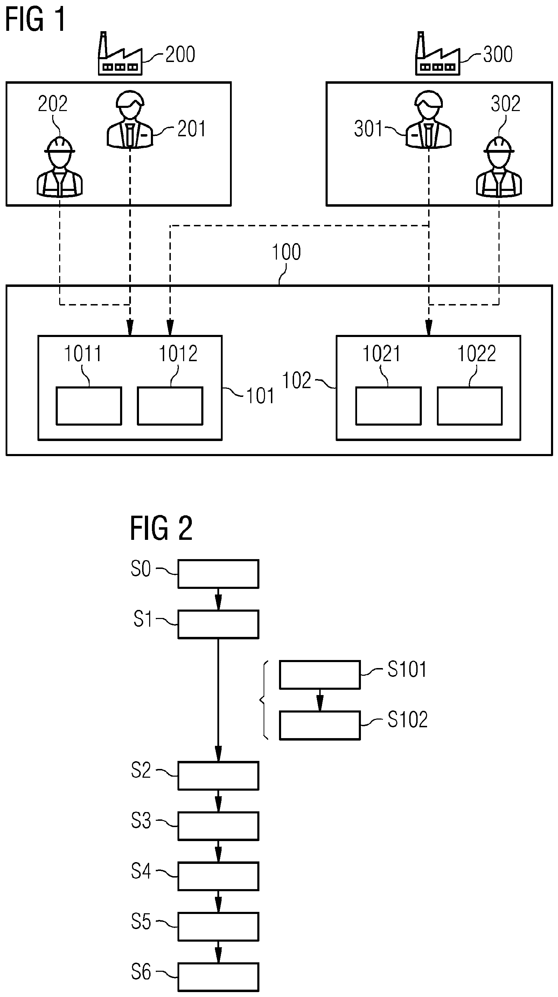

Wie in Fig. 1 gezeigt, umfasst das Multi-Domain IAM-Erweiterungssystem 100 mindestens zwei Identitätsverwaltungssysteme oder -Domänen, eine Domäne 101 für den OEM 200 und eine Domäne 102 für den Endkunden 300. Jede Domäne wird vom Administrator der entsprechenden Organisation erstellt und verwaltet. Anders ausgedrückt: Der Administrator 201 des OEMs erstellt und verwaltet die Domäne 101 des OEMs, während der Administrator 301 des Endkunden die Domäne 102 des Endkunden erstellt und verwaltet.

Jede Domäne des Multi-Domain IAM-Erweiterungssystem umfasst Untermodule, in denen Funktionen und Daten gespeichert werden. Im Einzelnen umfasst die Domäne 101 des OEMs ein Modul 1011 zur Speicherung von Funktionen und ein Modul 1012 zur Speicherung von Daten. Wenn wir also das oben genannte Beispiel aufgreifen, kann das Modul 1011 zur Speicherung von Funktionen die Funktion der sicheren maximalen Drehzahl für eine CNC-Bohrmaschine enthalten, während das Datenmodul 1012 der OEM-Domäne den entsprechenden Wert dieser sicheren maximalen Drehzahl enthalten kann. Die in der OEM-Domäne 101 vorhandenen Funktionen und Daten sollen keiner Person in der Organisation des Endkunden 300 bekannt sein, auf sie zugreifen oder sie verändern können. Mit anderen Worten, das Multi-Domain IAM-Erweiterungssystem 100 ist so konfiguriert, dass der Zugriff auf die Domäne 101 des OEMs nur für einen Administrator 201 des OEMs oder einen Mitarbeiter 202 des OEMs möglich ist. Dennoch ist in einer besonderen Umsetzung der vorliegenden Erfindung das Multi-Domain IAM-Erweiterungssystem 100 so konfiguriert, dass es dem Administrator 301 des Endkunden 300 einen Sonderzugriff ermöglicht. Dieser Sonderzugriff ist auf die Möglichkeit beschränkt, den Zugriff einer Person aus der Organisation des OEMs auf die Domain 101 des OEMs des Systems 100 zu blockieren oder zuzulassen. Diese Funktion soll es dem Endkunden 300 ermöglichen, die Operationen, die vom OEM an den Maschinen/Systemen zu Zeiten durchgeführt werden können, in denen Nutzungsunterbrechungen unerwünscht sind, einzuschränken, während gleichzeitig sichergestellt wird, dass derselbe Administrator 301 des Endkunden unter keinen Umständen in die Funktionen oder Daten der OEM-Domäne eingreifen kann. Die Domäne 101 des OEMs bleibt somit eine Domäne, die dem OEM vorbehalten ist.

In einer zeitlichen Abfolge wird die OEM-Domäne 101 zunächst in Form einer Basisdomäne des IAM-Systems 100 erstellt, da diese Domäne vor der Lieferung der Maschine oder des Systems an den Endkunden 300 vorbereitet und implementiert wird. So wird die Domäne 102 des Endkunden nachträglich in Form einer Erweiterungsdomäne des IAM-Systems 100 erstellt, die als zusätzliche Domäne des Systems 100 hinzukommt, auf die der Endkunde 300 Zugriff hat. In einer bevorzugten Implementierung haben nur ein Administrator 301 des Endkunden 300 oder ein Mitarbeiter 302 des Endkunden 300 Zugriff auf die Domäne 102 des Endkunden.

Ähnlich wie die Domäne 101 des OEMs umfasst die Domäne 102 des Endkunden 300 ein Modul 1021 zum Speichern von Endkundenfunktionen und ein Modul 1022 zum Speichern von Endkundendaten. Das IAM-System 100 und die Endkundendomäne 102 des Endkunden 300 sind so konfiguriert, dass nur Personen aus der Organisation des Endkunden 300 Zugriff auf die Endkundendomäne 102 des Endkunden 300 haben.

Es sei angemerkt, dass in bevorzugten Implementierungen die Administratoren 201 des OEMs 200 und die Administratoren 301 des Endkunden 300 die Personen in ihren jeweiligen Organisationen sind, die für die Definition der Rollen, Funktionen und Zugriffsprivilegien der Mitarbeiter ihrer jeweiligen Organisationen verantwortlich sind.

Es ist interessant zu erwähnen, dass das Multi-Domain IAM-Erweiterungssystem 100 für die Zugangs- und Identitätsverwaltung auf unterschiedliche Weise installiert werden kann.

Ein Ansatz kann darin bestehen, dieses IAM-System 100 direkt lokal auf der gelieferten Maschine oder dem gelieferten Industriesystem zu installieren, d. h. in einem Computersystem dieser Maschine oder dieses Systems, das mindestens einen Speicher zur Speicherung der Domänen sowie ihrer Module umfasst. Nichtsdestotrotz gibt es auch andere Formen der Implementierung, ohne die Funktionsweise der vorliegenden Erfindung in Frage zu stellen. Tatsächlich kann das System 100 sehr wohl in einem zentralisierten System des Endkunden 300 installiert werden oder sogar in einem zentralisierten System des OEMs 200 vorgehalten werden. Auch eine verteilte Implementierung des Systems 100 zwischen den Computersystemen des OEMs und des Endkunden 300 ist durchaus denkbar. Ebenso kann das System in einer Cloud außerhalb der Computersysteme des OEMs 200 und des Endkunden 300 implementiert werden.

Fig. 2 zeigt die Schritte einer computerimplementierten Methode, die die Erstellung und Nutzung des Multi-Domain IAM-Erweiterungssystems 100 für die Zugangs- und Identitätsverwaltung ermöglicht.

In Schritt S0 erstellt der OEM das System 100. Dieses kann eine der zuvor besprochenen Formen annehmen, z. B. auf dem Speicher einer Maschine installiert werden. In diesem Fall wird die Maschine ein Kommunikationsmodul haben, das es ermöglicht, mit den Systemen des OEMs und eines Endkunden zu kommunizieren.

In Schritt S1 erstellt der OEM seine Domäne 101 innerhalb des Systems 100 oder Basisdomäne, initialisiert sie und konfiguriert den Inhalt des Funktions-Speichermoduls 1011 und des Daten-Speichermoduls 1012. Bei dieser Erstellung werden die Zugriffsrechte der Domäne 101 des OEMs 200 konfiguriert (z. B. durch den Administrator 201), um den Zugriff auf den Inhalt der Module 1011 und 1012 der Domäne 101 des OEMs 200 durch Personen zu verhindern, die nicht Teil der Organisation des OEMs sind. Ebenso sind diese Zugriffsrechte nur durch den OEM 300 rekonfigurierbar.

Optional kann der OEM in einem Unterschritt S101 bereits die Domäne 102 des Endkunden im System 100 erstellen und initialisieren. Dieser Schritt kann jedoch auch später im Prozess erfolgen, z. B. durch den Endkunden, wenn die Maschinen und Systeme in seinen Besitz gebracht werden.

Für den Fall, dass der Unterschritt S101 durchgeführt wurde, kann ein weiterer optionaler Unterschritt S102 durchgeführt werden, in dem der OEM bereits eine Vorkonfiguration der Domäne 102 des Endbenutzers 300 durchführen kann, indem er den Inhalt des Funktions-Speichermoduls 1021 und des Daten-Speichermoduls 1022 der Endkunden-Domäne konfiguriert.

Im Schritt S2 kann der Endkunde 300 die Erstellung und Initialisierung der Endkundendomäne 102 oder Erweiterungsdomäne durchführen, wenn der optionale Unterschritt S101 nicht durchgeführt wurde.

Ebenso kann der Endkunde 300 die Konfiguration der Domäne 102 des Endbenutzers 300 vornehmen, indem er den Inhalt des Funktions-Speichermoduls 1021 und des Daten-Speichermoduls 1022 der Domäne des Endkunden konfiguriert, wenn der optionale Unterschritt S102 nicht durchgeführt wurde.

Im optionalen Schritt S3 kann der Endkunde 300 auf seine Domäne 102 zugreifen und neue Buchungen in den Funktions- und Datenspeichermodulen 1021 und 1022 seiner Domäne 102 vornehmen.

Im optionalen Schritt S4 kann der Endkunde 300 den Zugriff des OEMs auf seine Domäne 101 blockieren. Auf diese Weise kann der Endkunde ungewollte Eingriffe in seine Maschinen oder Systeme verhindern.

Im optionalen Schritt S5 kann der Endkunde 300 den Zugriff des OEMs auf seine Domain 101 entsperren.

Im optionalen Schritt S6 kann der OEM 200 auf seine Domäne 101 zugreifen und neue Schreibvorgänge in den Funktions- und Datenspeichermodulen 1021 und 1022 seiner Domäne 101 vornehmen.

Mit der Multi-Domain-Erweiterung IAM 100 kann der OEM bestimmte Einstellungen, Daten und Funktionen jederzeit unter seiner Zugriffskontrolle halten. Der Endkunde kann den Zugriff auf maschinenspezifischer Basis konfigurieren, wodurch er Identitäten wie Personen, Mitarbeitern und Benutzern bestimmte Rollen oder Rechte zuweisen kann.

Im Folgenden werden Ausführungsformen der vorliegenden Offenbarung unter Bezugnahme auf die begleitenden Zeichnungen ausführlich beschrieben. Es sei darauf hingewiesen, dass in den Zeichnungen dieselben Bezugsziffern verwendet werden, um identische oder ähnliche Elemente zu bezeichnen.

Zusammenfassend lässt sich sagen, dass das oben vorgestellte Multi-Domain IAM-Erweiterungssystem im Vergleich zum Stand der Technik mehrere technische Vorteile bietet. Erstens ermöglicht es dem OEM und dem Endkunden, den Zugriff auf die Maschine oder das System sicher und effizient zu verwalten, ohne in die Identitäts- und Zugriffsverwaltung der jeweils anderen Partei einzugreifen. Dies wird erreicht, indem mindestens zwei separate Identitätsmanagement-Subsysteme (oder Domänen) geschaffen werden, die vom Administrator der jeweiligen Organisation verwaltet werden.

Zweitens stellt die Erfindung ein feingranulares Rollen- und Rechtesystem sowohl für den OEM als auch für den Endkunden bereit, mit dem sie den Zugriff auf bestimmte Funktionen und Daten einfach verwalten können. Dies erhöht die Sicherheit der Maschine oder des Systems und stellt sicher, dass nur autorisierte Mitarbeiter der jeweiligen Organisation Zugang zu sensiblen Informationen oder Funktionen haben.

Drittens ermöglicht die Erfindung die Integration des Zugriffsschutzes der Maschine oder des Systems in zentrale Systeme des Endkunden und vereinfacht so die Verwaltung des Zugriffs über mehrere Maschinen oder Systeme hinweg. Dadurch entfällt die Notwendigkeit, für jede Maschine oder jedes System individuelle Passwörter zu verwalten, und die Sicherheit wird insgesamt erhöht, da sichergestellt wird, dass alle Zugriffe zentral verwaltet werden.

Darüber hinaus ermöglicht die Erfindung dem OEM, den Zugriff auf seine geschützten Daten und Funktionen jederzeit zu kontrollieren, während der Endkunde den Zugriff auf die Maschine oder das System, die bzw. das für den Betrieb innerhalb seiner Organisation erforderlich ist, verwalten kann. Darüber hinaus kann der Endkunde den Zugriff auf maschinenspezifischer Basis konfigurieren, sodass verschiedene Mitarbeiter unterschiedliche Rollen und Rechte auf verschiedenen Maschinen oder Systemen haben können.

Schließlich hat die vorgeschlagene Lösung auch den Vorteil, dass der Endkunde den Zugang des OEMs blockieren oder freigeben kann. Dadurch wird in einer Teleinterventions-/Teleservice-Umgebung sichergestellt, dass der OEM nicht auf eine Weise eingreifen kann, die dem vom Endkunden implementierten Produktionsprozess schaden würde. Die Verfügbarkeit und Sicherheit auf Seiten des Endkunden wird dadurch erheblich verbessert.

Insgesamt stellt das Multi-Domain IAM-Erweiterungssystem eine erhebliche Verbesserung gegenüber bestehenden Lösungen dar, da es eine sichere und effiziente Möglichkeit bietet, den Zugang zu Maschinen oder Systemen zu verwalten, mit einer Feinsteuerung von Rollen und Rechten, einer zentralen Zugangsverwaltung und der Möglichkeit, Daten und OEM-Funktionen zu schützen.

Obwohl die vorliegende Offenbarung im Vorhergehenden durch bevorzugte Ausführungsformen beschrieben wurde, ist sie nicht darauf beschränkt, sondern kann vielmehr auf vielfältige Weise modifiziert werden.

## Patentansprüche

1. Computerimplementiertes Identitäts- und Zugriffsverwaltungssystem (100),
mit mindestens zwei Domänen (101, 102), die jeweils einer Benutzerorganisation zugeordnet sind,
- wobei eine erste Domäne (101) eine OEM-Domäne (200) ist, die mit Benutzern einer OEM-Organisation verbunden ist,
- wobei eine zweite Domäne (102) eine Endkunden-Domäne (300) ist, die mit Benutzern einer EndkundenOrganisation verbunden ist,
- wobei jede Domäne (101, 102) ein Modul (1011, 1021) zum Speichern von Funktionen und ein Modul (1012, 1022) zum Speichern von Daten, die den Funktionen entsprechen, umfasst,
- wobei das Modul (1011) zum Speichern von Funktionen und das Modul (1012) zum Speichern von Daten der OEM-Domäne (101) so konfiguriert sind, dass sie nur einem Benutzer (201, 202) der OEM-Organisation Zugriff gewähren,
**dadurch gekennzeichnet,**
- **dass** das System so konfiguriert ist, dass es einem Benutzer (301, 302) der Endkundenorganisation einen eingeschränkten Zugriff auf die OEM-Domäne (101) gewährt, der es ermöglicht, den Zugriff von Benutzern (201, 202) des OEMs (200) auf das Modul (1011) zum Speichern von Funktionen und das Modul (1012) zum Speichern von Daten der OEM-Domäne (101) zu blockieren oder freizugeben.

2. System nach Anspruch 1,
**dadurch gekennzeichnet,**
**dass** die Module (1011, 1012) der OEM-Domäne (101) so konfiguriert sind, dass Zugriffsrechte nur von einem Administrator (201) der OEM-Organisation (200) konfiguriert werden können.

3. System nach Anspruch 1 oder 2,
**dadurch gekennzeichnet,**
**dass** jede Domäne (101, 102) lokal auf einem Computersystem einer Maschine installiert ist.

4. System nach Anspruch 1 oder 2,
**dadurch gekennzeichnet,**
**dass** jede Domäne (101, 102) auf einem zentralen Computersystem installiert ist.

5. Computerimplementiertes Verfahren zum Erstellen eines Identitäts- und Zugriffsverwaltungssystems (100), insbesondere eines Identitäts- und Zugriffsverwaltungssystems (100) gemäß einem der Ansprüche 1 bis 6, mit mindestens zwei Domänen (101, 102), die jeweils einer Benutzerorganisation zugeordnet sind, wobei eine erste Domäne (101) eine OEM-Domäne (200) ist, die Benutzern einer OEM-Organisation zugeordnet ist, und wobei eine zweite Domäne (102) eine Endkundendomäne (300) ist, die Benutzern einer Endkundenorganisation zugeordnet ist, wobei das Verfahren die folgenden Schritte umfasst:
Erstellen (S0), durch einen OEM (200), des Identitäts- und Zugriffsverwaltungssystems (100);
Erstellen (S1), durch den OEM (200), der OEM-Domäne (101) und Initialisieren und Konfigurieren eines Moduls (1011) zum Speichern von Funktionen und eines Moduls (1012) zum Speichern von Daten in der OEM-Domäne (101), wobei das Modul (1011) zum Speichern von Funktionen und das Modul (1012, 1022) zum Speichern von Daten der OEM-Domäne (101) so konfiguriert sind, dass sie nur einem Benutzer der Organisation des OEMs (200) den Zugriff erlauben;
Erstellen (S2), durch den OEM (200) oder durch den Endkunden (300), der Endkundendomäne (101) im System (100),
**gekennzeichnet durch**
Gewähren, einem Benutzer (301, 302) der Endkundenorganisation, einen eingeschränkten Zugriff auf die OEM-Domäne (101), der es ermöglicht, den Zugriff von Benutzern (201, 202) des OEMs (200) auf das Modul (1011) zum Speichern von Funktionen und das Modul (1012) zum Speichern von Daten der OEM-Domäne (101) zu blockieren oder freizugeben.

6. Verfahren nach Anspruch 5,
**dadurch gekennzeichnet,**
**dass** das Verfahren ferner umfasst:
Konfigurieren, durch einen Administrator (201) des OEMs (200), von Zugriffsrechten auf die OEM-Domäne (101).

7. Verfahren nach Anspruch 6,
**dadurch gekennzeichnet,**
**dass** der Schritt des Konfigurierens von Zugängen umfasst:
Konfigurieren, durch einen Administrator (301) des Endkunden (300), der Zugriffsrechte auf die Domäne (102) des Endkunden.

8. Verfahren nach einem der vorherigen verfahrensbezogenen Ansprüche,
**dadurch gekennzeichnet,**
**dass** das Verfahren ferner umfasst:
- Initialisieren (S101) und Konfigurieren (S102), durch den OEM (200), eines Moduls (1021) zum Speichern von Funktionen und eines Moduls (1022) zum Speichern von Daten in der Endkunden-Domäne (102), oder
- Initialisieren (S101) und Konfigurieren (S102), durch den Endkunden (300), eines Moduls (1021) zum Speichern von Funktionen und eines Moduls (1022) zum Speichern von Daten in der Endkunden-Domäne (102).

9. Verfahren nach Anspruch 8,
**dadurch gekennzeichnet,**
**dass** das Verfahren ferner umfasst:
Zugreifen (S3), durch den Endkunden (300), auf die Endkundendomäne (102) und Vornehmen von Schreibvorgängen in dem Modul (1021) zum Speichern von Funktionen und dem Modul (1022) zum Speichern von Daten der Endkundendomäne (102).

10. Verfahren nach einem der vorherigen verfahrensbezogenen Ansprüche,
**dadurch gekennzeichnet,**
**dass** das Verfahren ferner umfasst:
Blockieren (S4) des Zugriffs von Benutzern (201, 202) des O-EMs (200) auf die Domäne (101) des OEMs durch den Endkunden (300).

11. Verfahren nach einem der vorherigen verfahrensbezogenen Ansprüche,
**dadurch gekennzeichnet,**
**dass** das Verfahren ferner umfasst:
Entsperren (S5), durch den Endkunden (300), des Zugriffs einer OEM-Entität (200) auf die Domäne (101) des OEMs.

12. Verfahren nach einem der vorherigen verfahrensbezogenen Ansprüche,
**dadurch gekennzeichnet,**
**dass** das Verfahren ferner umfasst:
Zugriff (S6) auf die OEM-Domäne (101) über den OEM (200) und Durchführung von Schreibvorgängen in dem Modul (1011) zum Speichern von Funktionen und dem Modul (1012) der OEM-Domäne (101).

13. Computerprogramm zur Erstellung eines Identitäts- und Zugriffsverwaltungssystems (100) mit mindestens zwei Domänen (101, 102), die jeweils einer Benutzerorganisation zugeordnet sind, mit Anweisungen, die, wenn das Programm von einem Computer ausgeführt wird, diesen dazu veranlassen, die Schritte des Verfahrens nach einem der Ansprüche 5 bis 12 auszuführen.

14. Computerlesbares Aufzeichnungsmedium mit Anweisungen zur Erstellung eines Identitäts- und Zugriffsverwaltungssystems (100) mit mindestens zwei Domänen (101, 102), die jeweils einer Benutzerorganisation zugeordnet sind, die, wenn sie von einem Computer ausgeführt werden, diesen dazu veranlassen, die Schritte des Verfahrens nach einem der Ansprüche 5 bis 12 durchzuführen.

## Claims

1. Computer-implemented identity and access management system (100)
with at least two domains (101, 102) that are each assigned to a user organisation,
- wherein a first domain (101) is an OEM domain (200) associated with users of an OEM organisation,
- wherein a second domain (102) is an end customer domain (300) associated with users of an end customer organisation,
- wherein each domain (101, 102) comprises a module (1011, 1021) for storing functions and a module (1012, 1022) for storing data corresponding to the functions,
- wherein the module (1011) for storing functions and the module (1012) for storing data of the OEM domain (101) are configured such that they only grant access to a user (201, 202) of the OEM organisation,
**characterised in**
- **that** the system is configured to grant a user (301, 302) of the end customer organisation restricted access to the OEM domain (101) that makes it possible to block or release access of users (201, 202) of the OEM (200) to the module (1011) for storing functions and the module (1012) for storing data of the OEM domain (101).

2. System according to claim 1,
**characterised in**
**that** the modules (1011, 1012) of the OEM domain (101) are configured such that access rights can only be configured by an administrator (201) of the OEM organisation (200).

3. System according to claim 1 or 2,
**characterised in**
**that** each domain (101, 102) is installed locally on a computer system of a machine.

4. System according to claim 1 or 2,
**characterised in**
**that** each domain (101, 102) is installed on a central computer system.

5. Computer-implemented method for creating an identity and access management system (100), in particular an identity and access management system (100) according to one of claims 1 to 6, with at least two domains (101, 102) that are each assigned to a user organisation, wherein a first domain (101) is an OEM domain (200) assigned to users of an OEM organisation, and wherein a second domain (102) is an end customer domain (300) assigned to users of an end customer organisation, wherein the method comprises the following steps:
creating (S0), by an OEM (200), the identity and access management system (100);
creating (S1), by the OEM (200), the OEM domain (101) and initialising and configuring a module (1011) for storing functions and a module (1012) for storing data in the OEM domain (101), wherein the module (1011) is configured for storing functions and the module (1012, 1022) is configured for storing data of the OEM domain (101) such that they only allow access to a user of the organisation of the OEM (200);
creating (S2), by the OEM (200) or by the end customer (300), the end customer domain (101) in the system (100),
**characterised by**
granting a user (301, 302) of the end customer organisation restricted access to the OEM domain (101) that makes it possible to block or release access of users (201, 202) of the OEM (200) to the module (1011) for storing functions and the module (1012) for storing data of the OEM domain (101).

6. Method according to claim 5,
**characterised in**
**that** the method further comprises:
configuring, by an administrator (201) of the OEM (200), access rights to the OEM domain (101).

7. Method according to claim 6,
**characterised in**
**that** the step of configuring access comprises:
configuring, by an administrator (301) of the end customer, (300), access rights to the domain (102) of the end customer.

8. Method according to one of the previous method-related claims,
**characterised in**
**that** the method further comprises:
- initialising (S101) and configuring (S102), by the OEM (200), a module (1021) for storing functions and a module (1022) for storing data in the end customer domain (102), or
- initialising (S101) and configuring (S102), by the end customer (300), a module (1021) for storing functions and a module (1022) for storing data in the end customer domain (102).

9. Method according to claim 8,
**characterised in**
**that** the method further comprises:
accessing (S3), by the end customer (300), the end customer domain (102) and performing write operations in the module (1021) for storing functions and the module (1022) for storing data of the end customer domain (102).

10. Method according to one of the previous method-related claims,
**characterised in**
**that** the method further comprises:
blocking (S4) access by users (201, 202) of the OEM (200) to the domain (101) of the OEM by the end customer (300).

11. Method according to one of the previous method-related claims,
**characterised in**
**that** the method further comprises:
unblocking (S5), by the end customer (300), access by an OEM entity (200) to the domain (101) of the OEM.

12. Method according to one of the previous method-related claims,
**characterised in**
**that** the method further comprises:
accessing (S6) the OEM domain (101) via the OEM (200) and performing write operations in the module (1011) for storing functions and the module (1012) of the OEM domain (101).

13. Computer program for creating an identity and access management system (100) with at least two domains (101, 102) that are each assigned to a user organisation, with instructions which, when the program is executed by a computer, cause the computer to execute the steps of the method as claimed in one of claims 5 to 12.

14. Computer-readable recording medium with instructions for creating an identity and access management system (100) with at least two domains (101, 102) that are each assigned to a user organisation which, when executed by a computer, cause the computer to execute the steps of the method according to one of claims 5 to 12.

## Revendications

1. Système (100) mis en œuvre par ordinateur de gestion d'identité et d'accès,
comprenant au moins deux domaines (101, 102), qui sont affectés respectivement à une organisation d'utilisateurs,
- dans lequel un premier domaine (101) est un domaine OEM (200), qui est relié à des utilisateurs d'une organisation OEM,
- dans lequel un deuxième domaine (102) est un domaine (300) de client final, qui est relié à des utilisateurs d'une organisation de client final,
- dans lequel chaque domaine (101, 102) comprend un module (1011, 1021) de mise en mémoire de fonctions et un module (1012, 1022) de mise en mémoire de données, qui correspondent aux fonctions,
- dans lequel le module (1011) de mise en mémoire de fonctions et le module (1012) de mise en mémoire de données du domaine OEM (101) sont ainsi configurés qu'ils accordent accès seulement à un utilisateur (201, 202) de l'organisation OEM, **caractérisé**
- **en ce que** le système est ainsi configuré qu'il accorde un accès limité au domaine OEM (101) à un utilisateur (301, 302) de l'organisation de client final, qui permet de bloquer ou de libérer l'accès d'utilisateurs (201, 202) de l'OEM (200) au module (1011) pour la mise en mémoire de fonctions et au module (1012) pour la mise en mémoire de données du domaine (101) OEM.

2. Système suivant la revendication 1,
**caractérisé**
**en ce que** les modules (1011, 1012) du domaine OEM (101) sont ainsi configurés que des droits d'accès peuvent être configurés seulement par un administrateur (201) de l'organisation OEM (200).

3. Système suivant la revendication 1 ou 2,
**caractérisé**
**en ce que** chaque domaine (101, 102) est installé localement sur un système informatique d'une machine.

4. Système suivant la revendication 1 ou 2,
**caractérisé**
**en ce que** chaque domaine (101, 102) est installé sur un système informatique centralisé.

5. Procédé mis en œuvre par ordinateur d'établissement d'un système (100) de gestion d'identité et d'accès, en particulier d'un système (100) de gestion d'identité et d'accès suivant l'une des revendications 1 à 6, comprenant au moins deux domaines (101, 102), qui sont affectés respectivement à une organisation d'utilisateurs, dans lequel un premier domaine (101) est un domaine OEM (200), qui est affecté à des utilisateurs d'une organisation OEM, et dans lequel un deuxième domaine (102) est un domaine (300) de client final, qui est affecté à des utilisateurs d'une organisation de client final, dans lequel le procédé comprend les stades suivants :
établissement (S0), par un OEM (200), du système (100) de gestion d'identité et d'accès ;
établissement (S1), par l'OEM (200), du domaine OEM (101) et initialisation et configuration d'un module (1011) de mise en mémoire de fonctions et d'un module (1012) de mise en mémoire de données dans le domaine OEM (101), dans lequel le module (1011) de mise en mémoire de fonctions et le module (1012, 1022) de mise en mémoire de données du domaine OEM (101) sont ainsi configurés qu'ils n'autorisent l'accès qu'à un utilisateur de l'organisation OEM (200) ;
établissement (S2), par l'OEM (200) ou par le client (300) final, du domaine (101) de client final dans le système (100),
**caractérisé par**
accorder, à un utilisateur (301, 302) de l'organisation de client final, un accès limité au domaine OEM (101), qui permet de bloquer ou de libérer l'accès d'utilisateurs (201, 202) de l'OEM (200) au module (1011) de mise en mémoire de fonctions et au module (1012) de mise en mémoire de données du domaine OEM (101).

6. Procédé suivant la revendication 5,
**caractérisé**
**en ce que** le procédé comprend en outre :
configuration, par un administrateur (201) du domaine (200), du droit d'accès au domaine OEM (101).

7. Procédé suivant la revendication 6,
**caractérisé**
**en ce que** le stade de configuration d'accès comprend :
configuration, par un administrateur (301) du client final (300), des droits d'accès au domaine (102) du client final.

8. Procédé suivant l'une des revendications précédentes se rapportant au procédé,
**caractérisé**
**en ce que** le procédé comprend en outre :
- initialisation (S101) et configuration (S102), par l'OEM (200), d'un module (1021) de mise en mémoire de fonctions et d'un module (1022) de mise en mémoire de données dans le domaine (102) de client final, ou
- initialisation (S101) et configuration (S102), par le client (300) final, d'un module (1021) de mise en mémoire de fonctions et d'un module (1022) de mise en mémoire de données dans le domaine (102) de client final.

9. Procédé suivant la revendication 8,
**caractérisé**
**en ce que** le procédé comprend en outre : accès (S3), par le client (300) final, au domaine (102) de client final et exécution d'opérations d'écriture dans le module (1021) pour la mise en mémoire de fonctions et dans le module (1022) pour la mise en mémoire de données du domaine (102) de client final.

10. Procédé suivant l'une des revendications précédentes se rapportant au procédé,
**caractérisé**
**en ce que** le procédé comprend en outre :
blocage (S4) de l'accès d'utilisateurs (201, 202) de l'OEM (200) au domaine (101) de l'OEM par le client (300) final.

11. Procédé suivant l'une des revendications précédentes se rapportant au procédé,
**caractérisé**
**en ce que** le procédé comprend en outre : déblocage (S5), par le client (300) final, de l'accès d'une entité OEM (200) au domaine (101) de l'OEM.

12. Procédé suivant l'une des revendications précédentes se rapportant au procédé,
**caractérisé**
**en ce que** le procédé comprend en outre :
accès (S6) au domaine OEM (101) par l'OEM (200) et exécution d'opérations d'écriture dans le module (1011) pour la mise en mémoire de fonctions et dans le module (1012) du domaine OEM (101).

13. Programme d'ordinateur pour l'établissement d'un système (100) de gestion d'identité et d'accès, comprenant au moins deux domaines (101, 102), qui sont affectés respectivement à une organisation d'utilisateurs, comprenant des instructions qui, lorsque le programme est exécuté par un ordinateur, font que celui-ci exécute les stades du procédé suivant l'une des revendications 5 à 12.

14. Support d'enregistrement déchiffrable par ordinateur comprenant des instructions d'établissement d'un système (100) de gestion d'identité et d'accès, comprenant au moins deux domaines (101, 102), qui sont affectés respectivement à une organisation d'utilisateurs, qui, lorsqu'elles sont exécutées par un ordinateur, font que celui-ci exécute les stades du procédé suivant l'une des revendications 5 à 12.
